Europäisches Patentamt

European Patent Office

Office européen des brevets

(11) Publication number: **0 072 190**
**B1**

(12) **EUROPEAN PATENT SPECIFICATION**

(45) Date of publication of patent specification: **16.04.86**

(21) Application number: **82304102.5**

(22) Date of filing: **03.08.82**

(51) Int. Cl.⁴: **H 01 J 61/30, H 01 J 9/24**

(54) **A method for forming a green body for a ceramic arc tube used for a metal vapor discharge lamp and a molding die for forming said green body.**

(30) Priority: **04.08.81 JP 121316/81**

(43) Date of publication of application:
**16.02.83 Bulletin 83/07**

(45) Publication of the grant of the patent:
**16.04.86 Bulletin 86/16**

(84) Designated Contracting States:
**DE FR GB NL**

(56) References cited:
**EP-A-0 034 056**
**CH-B- 92 063**
**GB-A-1 309 337**
**GB-A-1 360 340**
**US-A- 934 666**

(73) Proprietor: **NGK INSULATORS, LTD.**
**2-56, Suda-cho, Mizuho-ku**
**Nagoya-shi, Aichi 467 (JP)**

(72) Inventor: **Furuta, Mamoru**
**20-10 Hironaga Shinden-Cho**
**Toyoake City (JP)**
Inventor: **Maeno, Yoshio**
**15, Takeda-Cho 2-chome Mizuho-ku**
**Nagoya City (JP)**
Inventor: **Kobayashi, Kazuo**
**87 Takamine-cho Showa-ku**
**Nagoya City (JP)**

(74) Representative: **Paget, Hugh Charles Edward**
**et al**
**MEWBURN ELLIS & CO. 2/3 Cursitor Street**
**London EC4A 1BQ (GB)**

## Description

The present invention relates to a method for forming a green body for a ceramic arc tube used for a metal vapor discharge lamp, such as a high pressure sodium lamp, a metal halide lamp or the like, and a mold for forming said green body.

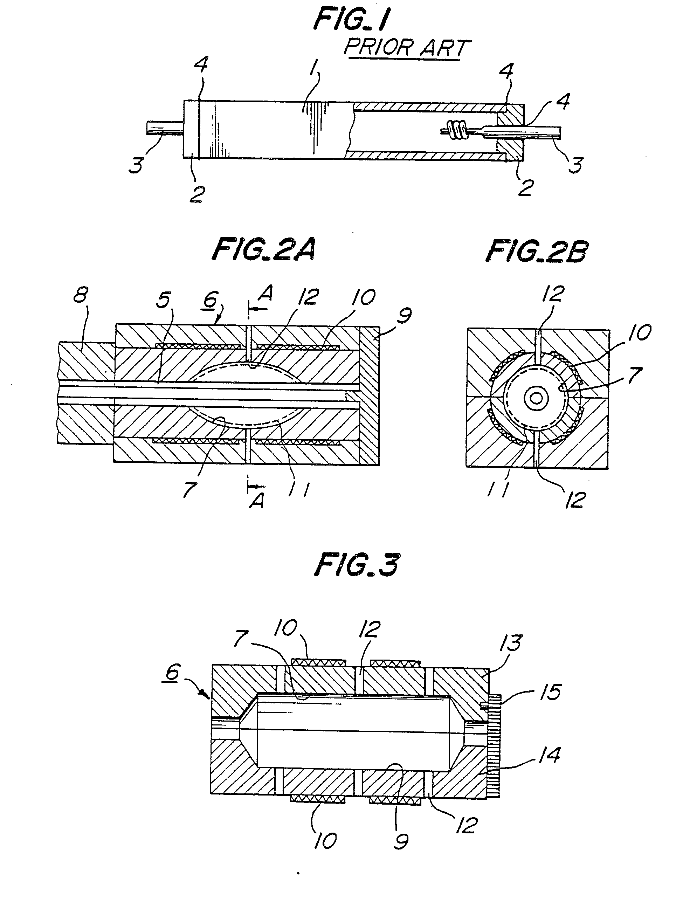

As shown in Fig. 1, ceramic arc tubes of these metal vapor discharge lamps may be produced by sealing a translucent alumina ceramic tube 1 which is open at both ends with heat resisting metal or ceramic caps 2 by means for a glass frit 4 and additionally co-sealing discharge electrodes 3 in central holes of the caps 2 with a glass frit 4. However, such arc tubes have a complicated production method and difficulties in relation to durability and stability of the metal vapor discharge lamps have arisen from poor gas tightness and corrosion resistance to the high pressure metal vapor at the regions of sealing with the glass frit, and there is difficulty in the improvement of luminous efficiency and color rendition because of the difficulty of maintaining a coldest spot of metal vapor due to the straight tubular shape.

Therefore, a ceramic integrally shaped arc tube in which the outer diameter of the arc discharge portion is larger than that of the end portions holding the discharge electrodes has been proposed. This shaped arc tube is made by forming a green body with a core shaped from metal or wax having a low melting point by isostatic pressing, heating the body to melt out the core, and firing the body. In this process, the green body is easily cracked owing to thermal expansion of the core, and core material may remain stuck on the inner surface of the body when the core is heated and melted out, so that the light transmittance of the arc tube obtained is reduced and the wall thickness of the tube is not uniform.

In our own European patent application EP 34 056, which falls under Art. 54(3) of the EPC and was published on 19th August 1981, after the priority date claimed in this application, a method of preparing a green body for a ceramic arc tube of such a shape is described, which involves the formation of a straight tubular green body from a mixture, for example by extrusion or pressing, followed by the shaping of the tubular body in a fusiform mold by applying fluid pressure to the inside of the body so as to inflate the middle portion more than the end portions. The mixture comprises fine alumina particles and a substantially non-thermoplastic organic plasticizer, e.g. methyl cellulose. The plasticizer may be removed pre-firing the shaped green body after taking it from the mold.

The mold employed in this method is divided into two halves, said two halves forming an inner cavity conforming to the desired shape of the tube when the mold-halves are engaged.

An object of the present invention is to provide a more satisfactory method and mold for forming a ceramic integrally shaped arc tube in which the outer diameter of the central portion is larger than that of the tube end portions.

The invention is set out in the claims.

Embodiments of the invention will now be described by way of example with reference to the accompanying drawings, in which:—

Fig. 1 (referred to above) is a front view of an arc tube of the prior art, part cutaway;

Fig. 2A is a schematic sectional view illustrating a method of the present invention and a mold used therefor and Fig. 2B is a sectional view of the mold of Fig. 2A on the line A—A in Fig. 2A;

Fig. 3 is a schematic sectional view of one mold embodying the present invention;

Fig. 4 is a series of diagrammatic views illustrating a method of the invention wherein a mold of the present invention made of two halves is used;

Fig. 5 is a schematic sectional view of another mold embodying the present invention; and

Figs. 6 and 7 are partially cutaway front views of ceramic arc tubes obtained by methods of the present invention.

To prepare the stiff and plastic (i.e. plastically deformable) body, active alumina fine powder having a high purity and which will become a translucent alumina ceramics on final firing, a sintering assistant, a binder consisting mainly of a water soluble thermal gelatinizing organic substance which is decomposed or volatilized by preliminary firing and a mixing assistant (for example water) are thoroughly wet mixed and then dried and kneaded so as to have a plasticity sufficient to effect the formation step below described.

The alumina fine powder and sintering assistant may be selected from known α-alumina, γ-alumina, magnesium compounds and rare earth compounds depending upon the required transmittance, firing conditions, mechanical properties and the like.

As the binder, water soluble thermally gelatinizing (thermosetting) organic substances, such as methyl cellulose, are preferred, because solubility is important in view of the affinity with alumina fine powders and convenience in handling and the thermal gelatinizing ability is important in view of the hardenability of the formed body when using a heated mold as described below. Selection of the organic substance and its amount may be determined by the shape of the product, the amount of deformation in the forming step and the like.

It is necessary that the mixing aid is such that the mixture is highly wetted or the mixing aid may act as a solvent. The mixing aid is removed in the subsequent steps of drying and firing. In general, water is used but it may be a water-insoluble agent dependent upon the shape of the formed body. Use of a vacuum kneader for obtaining the plasticity is desirable because no air is then present in the stiff plastic body.

The stiff plastic body is treated by an extruder or a press machine to obtain a tubular shaped body. The inner diameter of the tube is preferably equal to or slightly larger than the diameter of the electrodes of the discharge lamp in the finally fired tube.

Then, as shown in Figs. 2A and B, the tubular body 5 is placed in a fusiform cavity 7 inside a mold 6 pre-heated to a given temperature by an electric heater 10 embedded in the mold or provided outside the mold. An end portion 8 of a compressing machine (not shown) by which a compressed fluid is supplied into the interior of the tubular shaped body 5 from one end thereof, is connected to the mold 6 and an end member 9 for closing the other end opening of the body 5 is fitted to the mold 6. The compressing machine is operated to inflate the tubular shaped body so that its diameter at the central portion is larger than that of the tube end portions, and simultaneously the inflated tube is hardened and dried by heat generated by the heater 10 to obtain a formed body 11 shown by the broken lines. Then the application of the compressed fluid is stopped and the formed body 11 is removed from the mold 6.

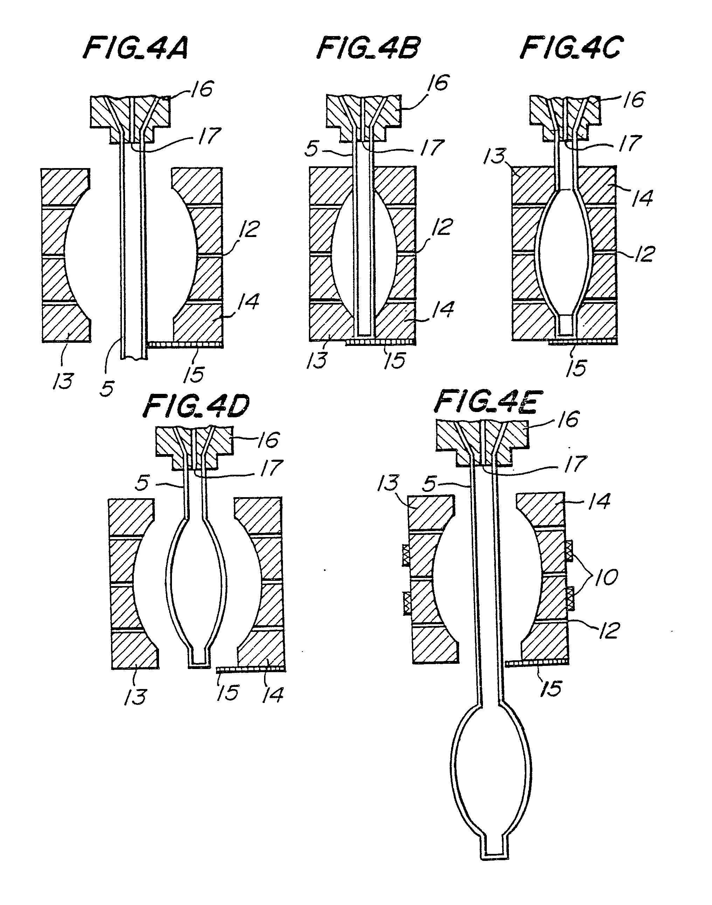

The mold is preferably provided with vents 12 extending from the cavity 7 of the mold 6 to the outside as shown in Fig. 3. These vents 12 serve for removal of air present between the tubular shaped body and the inner surface of the mold when supplying the compressed fluid into the tubular shaped body, and so promote the forming step. The air vents are small enough not to form convex portions on the outer surface of the formed body when the tubular body is inflated by the compressed fluid to the inner circumferential surface of the mold, and their size and number are determined so that air can be exhausted in correspondence with the inflation rate.

The mold 6 of Fig. 3 or Fig. 4 is constructed in two halves 13 and 14 divided at a plane parallel to the axial direction of the green tubular body whereby the formed body can be taken out from the mold 6 and continuous formation of the fusiform arc tubes is feasible as explained below.

The closing of one open end of the tubular shaped body in the forming step may be effected by plugging the end with an end member 9 as shown in Fig. 2 or by press-sealing and concurrently cutting said portion by means of a cutting device 15 provided at one end of either of the mold halves 13 and 14 (Figs. 3 and 4).

Referring to Figs. 4A—E, the half mold 13 and the half mold 14 provided with the cutting device 15 are separated and the straight tubular body 5 is extruded through an extrusion die 16 to a predetermined length so as to lie between the separated molding halves (Fig. 4A).

Then, the molding halves 13, 14 are brought together to engage the tubular body 5, whereby one end of the body is press-sealed and cut by the cutting device 15 (Fig. 4B).

A compressed fluid is then supplied into the interior of the tubular body 5 from an outlet 17 for supply of the compressed fluid in the extrusion die 16, to inflate the ceramic tube into a fusiform shape (Fig. 4C).

The formed body is heated by heaters provided in the mold to harden and dry it and then the mold halves 13 and 14 are separated (Fig. 4D). Preheating of the mold, before the body 5 is located in the mold, is preferred.

The tubular body 5 is then extruded by a further predetermined length to eject the formed fusiform body from the mold halves 13, 14 (Fig. 4E).

The process described above is successively repeated, so that a continuous process of making green tubes of fusiform shape can be obtained.

It is apparent from the above explanation that the fusiform tubes can be easily formed by dividing the mold into two halves.

Alternatively, the two halves of the mold may be connected by a hinge.

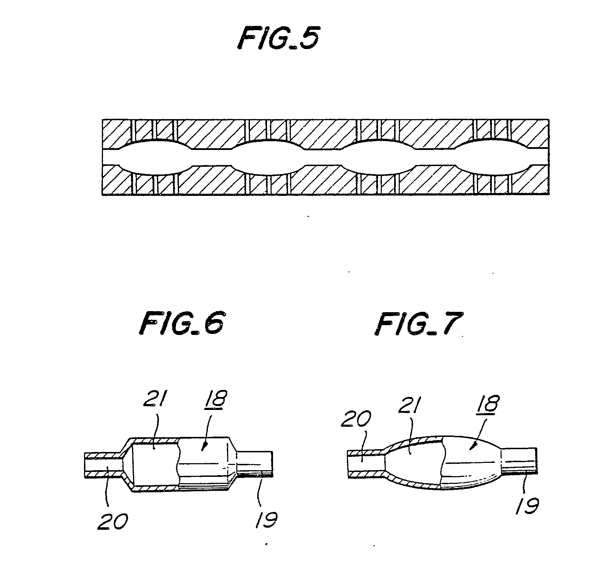

The mold need not have only one cavity as shown in Fig. 2, but may be provided with a plurality of serially arranged cavities having the above described fusiform shape as shown in Fig. 5. In this case, the shaped bodies may be cut off into individual articles after forming or after firing. The internal shape of the mold is merely required to be that which is suitable for the desired lamp properties.

As the heat generating means for the mold 6, electric heaters (for example a cartridge heater, a surface heater or the like) may be embedded in the mold or provided on its outer circumferential surface with a view to ease of temperature control and setting, but the present invention is not limited to the use of electric heaters and for example, passages for passing a heat exchanging fluid may be provided in the mold 6 and a heating fluid, such as hot water, supplied into the passages as a heat source.

The capacity of the heat source is influenced by the size and shape of the formed body 11 and also the characteristics of stiff plastic body and raw material, but it is for example suitable to arrange that the temperature of the inner surface of the mold is maintained at 80—160°C, preferably 130—150°C.

As the compressed fluid, air is generally convenient, but a fluid which does not attack the tube body, or an oil whose attack on the body is prevented by protecting the body with a rubbery elastomer, may be used. The fluid may be a heated fluid as the heating source for hardening and drying the formed body 11. The compressed fluid may be supplied for a time period in which the tubular body 5 is inflated and hardened and dried but this period is influenced by the nature of the stiff plastic body and the temperature of the mold. Particularly it may be important that this time period is determined in dependence upon the tube thickness and is preferably 3—10 seconds with a view to operational efficiency.

It is particularly advantageous for continuous formation that the outlet for supply of the compressed fluid is provided in the extrusion die for forming the tubular body as explained with reference to Fig. 4.

After removal from the mold, the formed body (green fusiform tube) is preliminary fired in air in order to remove the binder. The preliminary firing conditions are determined by the nature of the binder and the size of the product but the preferred temperature is one which does not deteriorate the activity of the formed body, e.g. lower than 1,200°C. The preliminary fired shaped body is finally fired at a high temperature. The final firing conditions, i.e. temperature, time and atmosphere, are determined by the composition of the stiff plastic body, the size of the product, the required transmittance, the mechanical strength of the product etc.

Embodiments of ceramic arc tubes 18 for metal vapor discharge lamps obtained by the above described method are shown in Fig. 6 and Fig. 7. In this method, the diameter of both tube end portions 19, 20 can be easily finished to a size suitable for insertion of electrodes of the metal vapor discharge lamp. The tube end portions 19, 20 and the central portion of the arc tube, i.e. the arc discharging portion 21, are fusiformly formed into a fusiform shape without the use of any bonding, so that it is possible to make regions of gas proof sealing very small. Since in the method of the present invention contamination of the inner surface of the arc tube can be avoided, the transmittance of the tube is higher. The shape of the arc tubes is of course not limited to those shown in Fig. 6 and Fig. 7 and can be suitably selected.

The following example is given for the purpose of illustration of the invention and is not intended as a limitation thereof.

Example

Alumina fine powder having purity of 99.99% and grain size of 0.1—0.2 µm was mixed with 0.05% by weight of magnesium oxide, 0.05% by weight of yttrium oxide, 3% by weight of an organic binder (methyl cellulose), 1% by weight of a lubricant of polyethylene glycol and 25% by weight of water and the mixture was thoroughly kneaded using a kneader and then subjected to a vacuum kneader treatment to prepare a stiff plastic body. This body was extruded through a piston type extruder into a tubular body having an outer diameter of 6.5 mm and an inner diameter of 2.5 mm and immediately placed in a mold having a fusiform inner circumferential surface and pre-heated to 150°C by a heater embedded in the mold. One end of the tubular body was sealed, after which compressed air was fed from the other end of the body to inflate it into a shape conforming to the inner shape of the mold to obtain a fusiform body. The formed body was left to stand in the mold for about 3 seconds to harden and dry the surface, after which the formed body was taken out of the mold and heated in air in a heating furnace at 800°C for 3 hours to completely remove the organic substances and then fired in a vacuum furnace at 1,800°C for 6 hours. The alumina ceramic tube thus obtained had high dimensional precision particularly in the outer diameter size and a uniform wall thickness and a smooth surface roughness. The tube showed an air proof of $10^{-5}$ Pa cm³/s in a leak detector and satisfactorily endured a quenching test in water from 200°C. When the tube was measured by means of an integrating sphere type photometer, the total light transmittance was 93%.

In the method of the present invention, the tubular body is inflated by a compressed fluid into the shape of the mold which has a predetermined dimension, and has been previously heated and thermally expanded. As a result, the arc tube obtained can have high dimensional precision. Since the moldability of the stiff plastic body is improved by the heating of the mold, the surface of the tube can be smooth and the spread of formation can be high. In the case of a tube having a thin wall thickness, the hardening and drying can be effected in a short time, so that there is no fear of deformation. In addition, the formed body can be hardened and concurrently dried, so that no special drying step is needed. The shrinkage of the body due to hardening and drying can be restrained by the compressed fluid, so that the size precision of the interior is excellent. Furthermore, the discharge arc portion and the electrode-holding portions are integrated, so that gas tightness is high. An excellent commercial production method, involving a continuous repeated set of steps, can be employed.

## Claims

1. A method for forming a green body for a ceramic arc tube (18) for a metal vapor discharge lamp, wherein the outer diameter of the arc discharging portion of the tube is larger than that of the end portions (19, 20) which are to hold the discharge electrodes, the method comprising preparing a stiff plastically deformable body consisting mainly of a ceramic material and containing a thermosetting binder, forming the said body into a straight tubular body (5) by extrusion, locating the said tubular body (5) within an inner cavity of a mold (6) having the shape desired for the arc tube body which mold has been previously heated, supplying a compressed fluid through one end of the said tubular body (5) into the interior of said tubular body (5) so as to inflate the tubular body into contact with the inner cavity surface of the mold, and hardening and drying the inflated body using the heat of the preheated mold.

2. A method according to claim 1 wherein the said ceramic material is mainly or wholly alumina.

3. A method according to claim 1 or claim 2 wherein the said binder is an organic material.

4. A method according to any one of claims 1 to 3, wherein the compressed fluid is supplied via an outlet opening (17) in an extrusion die (16) used to extrude the said deformable body.

5. A method according to any one of claims 1 to 4 wherein the mold (6) is divided into two halves (13, 14) by a plane parallel to the axial direction of a green body being formed and the extruded tubular ceramic material is located between the two halves so that said tubular body (5) is placed in the cavity formed in the inner surface of the mold when the two halves of mold are closed together.

6. A method according to claim 5 wherein sealing of one end opening of the tubular shaped body is effected by means of a cutting device (15) provided at one end of one half mold of the two mold halves, when the two halves are engaged together.

7. A mold for use in forming a green body for a ceramic arc tube for a metal vapor discharge lamp, which arc tube has a central portion of a diameter larger than that of the end portions of the tube, said mold being in two halves (13, 14) divided at a plane parallel to the axial direction of a said tube being formed, said two halves forming an inner cavity conforming to the desired shape of the tube when the two mold halves are engaged, vents being provided at the cavity portion and extending from the inner surface of the mold to the outside, one mold half being provided at one end with cutting means (15) and the mold being provided with heating means (10).

**Revendications**

1. Procédé de formage d'un corps cru pour l'obtention d'un tube à arc (18) en matière céramique pour une lampe à décharge à vapeur métallique dans laquelle le diamètre extérieur de la partie de décharge par arc du tube est plus grand que celui des parties terminales (19, 20) qui devront porter les électrodes de décharge, le procédé comprenant la préparation d'un corps ferme plastiquement déformable consistant principalement en une matière céramique et contenant un liant thermodurcissable, le formage dudit corps en un corps tubulaire droit (5) par extrusion, la mise en place dudit corps tubulaire (5) dans une cavité intérieure d'une moule (6) ayant la forme désirée du corps de tube à arc, ledit moule ayant été · prélablement réchauffé, l'amenée d'un fluide comprimé, à travers une extrémité dudit corps tubulaire (5), à l'intérieur dudit corps tubulaire (5) de manière à gonfler le corps tubulaire jusqu'à son entrée en contact avec la surface de la cavité intérieure du moule, et le durcissement et séchage du corps gonflé à l'aide de la chaleur du moule préchauffé.

2. Procédé suivant la revendication 1, dans lequel ladite matière céramique est entièrement ou partiellement de l'alumine.

3. Procédé suivant la revendication 1 ou la revendication 2, dans lequel ledit liant est une matière organique.

4. Procédé suivant l'une des revendications 1 à 3, dans lequel le fluide comprimé est fourni via un orifice de sortie (17) d'une filière d'extrudage (16) utilisée pour extruder ledit corps déformable.

5. Procédé suivant l'une quelconque des revendications 1 à 4, dans lequel le moule (6) est divisé en deux moitiés (13, 14) par un plan parallèle à la direction axiale d'un corps cru en cours de formage et la matière céramique tubulaire extrudée est située entre les deux moitiés de manière à ce que ledit corps tubulaire (5) soit placé dans la cavité formée dans la surface intérieure du moule quand les deux moitiés du moule sont fermées ensemble.

6. Procédé suivant la revendication 5, dans lequel le scellement d'une ouverture terminale du corps tubulaire mis en forme est effectuée au moyen d'un dispositif de coupe (15) prévu à une extrémité du demi-moule formant l'une des deux moitiés de moule, quand les deux moitiés sont au contact l'une de l'autre.

7. Moule servant au formage d'un corps cru pour l'obtention d'un tube à arc en matière céramique pour une lampe à décharge à vapeur métallique, lequel tube à arc comporte une partie centrale de plus grand diamètre que celui des parties terminales du tube, ledit moule so présentant en deux moitiés (13, 14) par division suivant un plan parallèle à la direction axiale dudit tube en cours de formage, lesdites deux moitiés formant une cavité intérieure conformée à la forme désirée du tube quand les deux moitiés de moule sont réunies, des évents étant prévus dans la partie comportant la cavité et disposés depuis la surface intérieure du moule jusqu'à l'extérieure, l'une des moitiés de moule étant pourvue à une extrémité d'un moyen de coupe (15) et le moule étant pourvu de moyens de chauffage (10).

**Patentansprüche**

Verfahren zur Formung eines Rohkörpers für eine als Metalldampfentladungslampe dienende keramische Bogenröhre (18), wobei der Außendurchmesser des Bogenentladungsbereichs der Röhre größer is also derjenige der Endbereiche (19, 20), welche die Entladungselektroden festhalten sollen, welches, Verfahren besteht aus:

Bereitstellen eines steifen plastisch verformbaren Körpers, der hauptsächlich aus einem keramischen Material besteht und eine warmhärtbares Bindemittel enthält, Verformen dieses Körpers in einen geraden rohrförmigen Körper (5) durch Strangpressen, Anordnen dieses rohrförmigen Körpers (5) in einem inneren Hohlraum einer Form (6), welche die gewünschte Form des Bogenröhrenkörpers aufweist, wobei die Form zuvor erhitzt wurde, Zuführen eines komprimierten Mediums durch ein Ende dieses rohrförmigen Rotors (5) in das Innere dieses rohrförmigen Körpers (5), um den rohrförmigen Körper aufzublasen und mit der Wand des Innenraums der Form in Berührung zu bringen, und Härten und Trocknen des aufgeblasenen Körpers mit Hilfe der Wärme der vorerhitzten Form.

2. Verfahren nach Anspruch 1, wobei das keramische Material hauptsächlich oder vollständig Tonerde ist.

3. Verfahren nach Anspruch 1 oder 2, wobei das Bindemittel ein organisches Material ist.

4. Verfahren nach einem der Ansprüche 1 bis 3, wobei das komprimierte Medium über eine Auslaßöffnung (17) in einer Strangpreßmatrize (16) zugeführt wird, die zum Strangpressen des verformbaren Körpers verwendet wird.

5. Verfahren nach einem der Ansprüche 1 bis 4, wobei die Form (6) durch eine zu der Axialrichtung eines gebildeten Rohkörpers parallele Ebene in zwei Hälften (13, 14) unterteilt ist, und wobei das stranggepreßte rohrförmige keramische Material zwischen den beiden Hälften angeordnet wird, so daß der rohrförmige Körper (5) in dem Hohlraum angeordnet ist, der von der Innenfläche der Form gebildet ist, wenn die beiden Hälften der Form geschlossen werden.

6. Verfahren nach Anspruch 5, wobei die Abdichtung einer Endöffnung des rohrförmigen Körpers mittels einer an einem Ende einer der beiden Formhälften angeordneten Schneideinrichtung (15) bewirkt wird, wenn die beiden Hälften miteinander in Eingriff gebracht werden.

7. Form für die Formgebung eines Rohkörpers für eine als Metalldampfentladungslampe dienende keramische Bogenröhre, die einen zentralen Bereich hat, dessen Durchmesser größer ist also derjenige der Endbereiche der Röhre, wobei die Form in einer zur Axialrichtung der gebildeten Röhre parallelen Ebene in zwei Hälften (13, 14) unterteilt ist, wobei die beiden Hälften einen der gewünschten Form der Röhre entsprechenden inneren Hohlraum bilden, wenn die beiden Hälften miteinander in Eingriff gebracht sind, wobei in dem Hohlraumbereich Entlüftungsöffnungen vorgesehen sind, die sich von der Innenfläche der Form zur Außenseite erstrecken, wobei eine Formhälfte an einem Ende mit einer Schneideinrichtung (15) versehen ist und wobei die Form mit einer Heizeinrichtung (10) versehen ist.

0 072 190

## FIG_1
### PRIOR ART

## FIG_2A

## FIG.2B

## FIG.3

1

# FIG.4A

# FIG.4B

# FIG.4C

# FIG.4D

# FIG.4E

# FIG.5

# FIG.6    FIG.7